# EUROPEAN PATENT SPECIFICATION

(11) **EP 4 359 239 B1**
(45) Date of publication and mention of the grant of the patent: **29.10.2025**
(21) Application number: 21736294.6
(22) Date of filing: 24.06.2021
(51) Int. Cl.: B60K 1/04, H01M 50/20, H01M 50/207, H01M 50/244, H01M 50/249, H01M 50/258

(54) **ENERGY STORAGE SYSTEM FOR A VEHICLE**
ENERGIESPEICHERSYSTEM FÜR EIN FAHRZEUG
SYSTÈME DE STOCKAGE D'ÉNERGIE POUR UN VÉHICULE

(43) Date of publication of application: 01.05.2024
(73) Proprietor: VOLVO TRUCK CORPORATION, 405 08 Göteborg (SE)
(72) Inventor: RAGOT, Sebastien, 413 11 GÖTEBORG (SE); SVENSSON, Jonatan, 431 34 MÖLNDAL (SE); LANDVIK, Sondre, 417 61 GÖTEBORG GÖTEBORG (SE); OHADI, Armin, 41279 GÖTEBORG (SE)
(74) Representative: Kransell & Wennborg KB
(86) International application number: PCT/EP2021/067371
(87) International publication number: WO 2022/268324

(56) References cited:
- WO-A1-2020/074105
- WO-A1-2021/091448
- DE-A1- 102017 007 490

## Description

### TECHNICAL FIELD

The present invention relates to an energy storage system for vehicle. The present invention also relates to a vehicle with an energy storage system. The present invention further relates to a method for mounting an energy storage system using the energy storage mounting system. Although the energy storage mounting system will mainly be described in relation to a heavy-duty vehicle, i.e. a truck, it may also be applicable for other types of vehicles comprising longitudinally extending frame rails at which an energy storage systems is connected.

### BACKGROUND

The propulsion systems of vehicles are continuously developed to meet the demands from the market. A particular feature relates to the emission of environmentally harmful exhaust gas. Therefore, vehicles propelled by electric machines have been increasingly popular, both for cars as well as for trucks and other heavy-duty vehicles.

In relation to heavy duty vehicles, the battery connected to the electric machine arranged to propel the vehicle needs to be relatively large to be able to deliver a substantial amount of electric power to the electric machine(s), in particular when aiming for covering a long driving range without having to frequently re-charge the battery.

A conventional placement of the batteries in a heavy-duty vehicle is along the longitudinally extending frame rails of the vehicle. This is substantially the same position as used for the fuel tanks of a truck using an internal combustion engine for propulsion. However, since the batteries are relatively heavy components, the assembly/disassembly process of the batteries to a part of the vehicle chassis is rather time consuming, at least in comparison to e.g. the replacement/mounting of an empty fuel tank. WO2020/074105A1 discloses a vehicle with an energy storage system and energy storage mounting system.

There is thus a desire to enable for a simplified and more time efficient assembly/disassembly process for energy storage systems such as batteries.

### SUMMARY

It is therefore an object of the present invention to provide an energy storage mounting system which at least partially overcomes the above-described deficiencies. The object is at least partly achieved by a system according to claim 1. The objective is also achieved by the other independent claims. The dependent claims are directed to advantageous embodiments of the invention.

The energy storage mounting system extends in a longitudinal direction, a transverse direction and in a vertical direction. The energy storage unit mounting system comprises vertically spaced-apart first energy storage unit mounting member and energy storage units inter-connecting member. Moreover, the first energy storage unit mounting member is connectable to a first energy storage unit of the ESS. The energy storage unit mounting member comprises a connecting portion configured to connect with a vehicle mounting member. Further, the energy storage units inter-connecting member is connectable to the first energy storage unit of the ESS. The energy storage units inter-connecting member is further configured to transversely inter-connect the first energy storage unit with a transversely opposite second energy storage unit.

By the configuration and arrangement of the first energy storage unit mounting member, it becomes possible to join a vertical upper part of the ESS to e.g. a vehicle mounting member of a longitudinal frame of the vehicle, while the energy storage units inter-connecting member allows for a simple joining of the first energy storage unit to the second energy storage unit vertically below the longitudinal frame so as to form an assembled configuration with the frame. As such, the energy storage units inter-connecting member is capable of restricting transverse movement of the first and second energy storage units away from each other, while the first energy storage unit mounting member transversely joins the first energy storage unit to the longitudinal frame so as to at least partly restrict rotational movement of the first energy storage unit relative to the longitudinal frame.

Further, the combined arrangement of the first energy storage unit mounting member and the energy storage units inter-connecting member permits the energy storage units (e.g. battery packs) to be isolated from the vehicle frame motion, thus allowing the frame to twist, and not lead forces and loads into the battery packs.

In addition, the energy storage mounting system contributes to an easier assembly of the ESS to the frame because the energy storage units can be joined to the frame and to each other from a transverse side of the vehicle, rather than from below of the vehicle. During assembly, the energy storage system can further suspend in the connecting portion(s) when the connecting portion(s) assumes a connected state with corresponding vehicle mounting member, while the energy storage units inter-connecting member is inserted into the energy storage units so as to connect them to each other and finally secure the energy storage system to the longitudinal frame. The present invention is thus advantageous during production of the vehicle as well as during maintenance. In other words, an additional advantage is that the assembly/disassembly process of the energy storage system to/from the vehicle is simplified.

Typically, although strictly not necessary, the energy storage mounting system comprises the vehicle mounting member connectable to a longitudinal frame of the vehicle. The vehicle mounting member comprises a mating rotational-locking element.

In addition, or alternatively, the connecting portion and the vehicle mounting member may define corresponding guide-aligning mating members configured to at least partly self-align with each other into a connecting position upon a transverse movement of the first energy storage unit of the ESS towards the longitudinal frame. An advantage is that the transition from the disconnected state to the connected state can be executed by a movement in the transverse direction. Such movement can also be executed in an easier manner compared to hitherto known sequences of connecting e.g. batteries to a vehicle frame.

Furthermore, the connecting portion may also be arranged in a number of different configurations as long as it can mate with the vehicle mounting member. Different embodiments of the connecting portion will be given below.

The connecting portion may comprise a rotational-locking element adapted to restrict rotation of the energy storage system when forming a rotational-locking connection with the corresponding vehicle mounting member. In addition, or alternatively, the vehicle mounting member comprises a corresponding mating rotational-locking element adapted to restrict rotation of the energy storage system when forming the rotational-locking connection with the corresponding rotational-locking element of the connecting portion.

The rotational-locking elements of the connecting portion is further configured to allow for disengagement of the rotational-locking connection from the vehicle mounting member by a movement of the connecting portion in a transverse direction.

The term rotational-locking connection refers to a connection in which the connecting portion restricts rotation of at least the energy storage unit associated with connecting portion about its center axis, which in a connected state with the frame typically corresponds Y-axis, i.e. the transvers direction. Typically, the rotational-locking connection is a connection in which the connecting portion completely prevent rotation of at least the energy storage unit associated with connecting portion about its center axis.

By way of example, the guide-aligning mating members may be complementary shaped guide-aligning mating members. The complementary shaped guide-aligning mating members can be designed in several different mannares. According to at least an example embodiment, each one of complementary shaped guide-aligning mating members comprises a circumferential angled surface. To this end, a cross-sectional profile of the guide-aligning mating member has an inclined cross-sectional profile. By increasing the dimension of the cross-sectional profile in an angled manner, a self-aligning effect is achieved since the connecting portion can be slightly offset to the vehicle mounting member and guided into the vehicle mounting member via the extended width at an end cross sectional profile.

The surface of the circumferential angled surface may typically be inclined downwards towards the longitudinal frame when the connecting portion and the vehicle mounting member are connected to each other, and the connecting portion assumes the connected state. According to an example embodiment, the surface of the vehicle mounting member may thus have an inclined connecting surface arranged to mate with the inclined surface of the connecting portion. The connecting surface of the vehicle mounting member is thus preferably inclined upwards towards the energy storage system when the connecting portion and the vehicle mounting member are connected to each other and the connecting portion assumes the connected state.

It should also be noted that the first energy storage unit mounting member and the energy storage units inter-connecting member are separate components of the energy storage mounting system. In addition, in a connected state with the longitudinal frame of the vehicle, the first energy storage unit mounting member and the energy storage units inter-connecting member are separate components of the energy storage mounting system that are arranged at vertically separate locations of the ESS.

The energy storage units inter-connecting member may be configured to transversely inter-connect the first energy storage unit with an opposite second energy storage unit. Typically, the energy storage units inter-connecting member may be configured to interconnect a transverse side of the first energy storage unit with a transverse side of the second energy storage unit. By way of example, the energy storage units inter-connecting member is an elongated inter-connecting member configured to be rotatably and transversely insertable from another transverse side of the first energy storage unit towards another transverse side of the second energy storage unit, whereby the first and second energy storage units are set in an inter-connecting configuration when the elongated inter-connecting member extends transversely though the first energy storage unit and inter-connects with a part of the second energy storage unit. Typically, the elongated inter-connecting member may comprise an outer thread for engaging at least with a corresponding thread of the second energy storage unit. Hereby, the inter-connecting configuration between the first and second energy storage units is a tensioned inter-connecting configuration. By the elongated inter-connecting member, it becomes possible to connect first and second battery groups are in a tensioned manner. That is, the first and second battery groups are mounted in position by rotating the elongated inter-connecting member towards the second battery group until an end position.

According to a first aspect, there is provided an energy storage system, ESS, according to claim 1 for a vehicle, comprising first and second energy storage units, and the energy storage mounting system, wherein the first energy storage unit comprises the first energy storage unit mounting member arranged at a first vertical position for connecting to a vehicle mounting member, and wherein the energy storage units inter-connecting member is connectable to the first energy storage unit of the ESS at a second vertical position, wherein the first vertical position is vertically above the second vertical position.

Effects and features of the first aspect are largely analogous to those described above in relation to the second aspect.

Typically, in a connected state of the energy storage system, the ESS thus comprises transversely opposite first and second energy storage units. In other wrods, the energy storage units inter-connecting member is configured to transversely inter-connect the first energy storage unit with an opposite second energy storage unit.

The first energy storage unit mounting member and the energy storage units inter-connecting member may be configured to attach the first energy storage unit in a generally vertical orientation to the longitudinal frame of the vehicle and transversely inter-connect the first energy storage unit with the opposite second energy storage unit.

The second energy storage unit may comprise a corresponding energy storage unit mounting member having a corresponding connecting portion configured to connect with a corresponding vehicle mounting member, wherein the corresponding energy storage unit mounting member is configured to attach the second energy storage unit in a generally vertical orientation to a second transverse side of the longitudinal frame of the vehicle, while the first and second energy storage units are inter-connected by the energy storage units inter-connecting member.

Typically, the energy storage units inter-connecting member may be configured to inter-connect a first transverse side of the first energy storage unit with an opposite mating first transverse side of the second energy storage unit.

The energy storage units inter-connecting member may be an elongated inter-connecting member configured to be rotatably and transversely insertable from a second transverse side of the first energy storage unit towards a second transverse side of the second energy storage unit, whereby the first and second energy storage units are in an inter-connecting configuration when the elongated inter-connecting member extends transversely though the first energy storage unit and a substantial part through the second energy storage unit.

The elongated inter-connecting member may comprise an outer thread for engaging at least with a corresponding thread of the second energy storage unit. Hereby, the inter-connecting configuration between the first and second energy storage units is a tensioned inter-connecting configuration. The elongated inter-connecting member may comprise an engagement portion to engage with the first energy storage unit. The engagement portion may comprise a locking element. The engagement portion may engage and lock with a support structure of the first energy storage unit. Other engagement configurations are also conceivable between the elongated inter-connecting member and the energy storage unit(s).

The energy storage system may typically comprise one or several battery modules arranged to supply electric current to electric power consumer(s) of the vehicle. The battery module(s) are thus arranged within a compartment/housing which is connectable to the mounting member. By way of example, the electric power consumer may be an electric machine arranged to propel the vehicle during operation. However, the energy storage system may also be one or several fuel cells arranged within the compartment/housing connectable to the mounting member. Accordingly, the mounting member should not be construed as solely being connectable to a battery.

Each one of the first and second energy storage units may comprise a plurality of battery packs arranged in a stack configuration along the longitudinal direction. By way of example, the battery packs are arranged in the stack configuration via a number of inter-leaved portions interconnecting longitudinal opposite arranged battery packs.

Typically, the elongated inter-connecting member may be rotatably and transversely insertable into at least one of the interleaved portions.

According to a second aspect, there is provided an arrangement for a vehicle comprising a longitudinal frame and an energy storage system according to the second aspect, wherein transversely opposite first and second energy storage units are connectable in a vertical orientation on opposite transverse sides of the longitudinal frame. Effects and features of the second aspect are also largely analogous to those described above in relation to the first aspect.

According to a third aspect the invention also relates to a vehicle comprising an energy storage system according to the first aspect. The invention also relates to a vehicle comprising an arrangement according to the second aspect. In other words, the vehicle comprises a longitudinal frame and an energy storage system, wherein the energy storage system comprises the energy storage mounting system.

Effects and features of the third aspect are also largely analogous to those described above in relation to the first aspect.

According to a fourth aspect, there is provided a method for mounting an energy storage system, ESS, to a longitudinal frame of a vehicle, the longitudinal frame having a vehicle mounting member and the energy storage system comprising a plurality of energy storage units, each one of the energy storage units having a corresponding energy storage unit mounting member, wherein the ESS further comprises an energy storage units inter-connecting member, the method comprising: positioning an energy storage unit mounting member of a first energy storage unit in a facing relationship with a corresponding vehicle mounting member on a first transverse side of the longitudinal frame; transversely moving the energy storage unit mounting member towards the vehicle mounting member until a connecting portion of the energy storage unit mounting member forms a connection with the vehicle mounting member on the first transverse side; positioning an energy storage unit mounting member of a second energy storage unit in a facing relationship with a corresponding vehicle mounting member on a second transverse side of the longitudinal frame, the second transverse side being opposite arranged the first transverse side; transversely moving the energy storage unit mounting member of the second energy storage unit towards the corresponding vehicle mounting member until a connecting portion of the energy storage unit mounting member forms a connection with the corresponding vehicle mounting member on the second transverse side; and transversely inter-connect the opposite first and second energy storage units by the energy storage units inter-connecting member. Effects and features of the fourth aspect are also largely analogous to those described above in relation to the first aspect.

Further features of, and advantages will become apparent when studying the appended claims and the following description. The skilled person will realize that different features may be combined to create embodiments other than those described in the following, without departing from the scope of the appended claims.

### BRIEF DESCRIPTION OF THE DRAWINGS

The above, as well as additional objects, features and advantages, will be better understood through the following illustrative and non-limiting detailed description of exemplary embodiments, wherein:
Fig. 1a is a perspective view illustrating a vehicle according to an example embodiment;
Fig. 1b illustrates a frame of the vehicle in Fig. 1a, and in particular its connection to the energy storage system and the energy storage mounting system according an example embodiment;
Figs. 2a - 2d illustrate some parts of the energy storage mounting system and the arrangement of the energy storage mounting system when connecting an energy storage system to the frame of the vehicle according to an example embodiment;
Figs. 3a - 3d illustrate an example embodiment of the assembly process of mounting the energy storage system to the frame of the vehicle according to an example embodiment; and
Fig. 4 is a flow chart of the method for mounting the energy storage system to the longitudinal frame.

### DETAILED DESCRIPTION

The present invention will now be described more fully hereinafter with reference to the accompanying drawings, in which exemplary embodiments are shown. The invention may, however, be embodied in many different forms (within the scope of the appended claims) and should not be construed as limited to the embodiments set forth herein; rather, these embodiments are provided for thoroughness and completeness. Like reference character refer to like elements throughout the description.

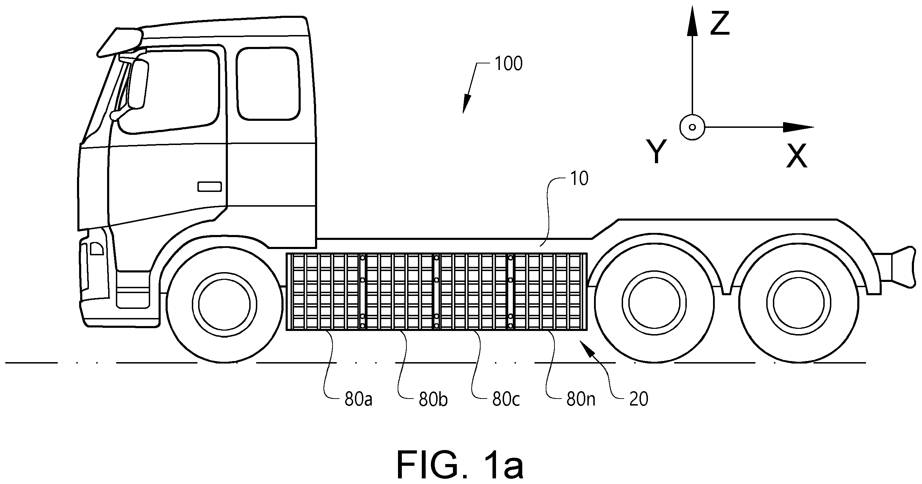

With particular reference to Fig. 1a, there is provided a vehicle 1 in the form of a truck. The vehicle 1 comprises a frame structure composed of two longitudinal frames 10, whereby an energy storage system, ESS, 20 is connected to the longitudinal frames 10.

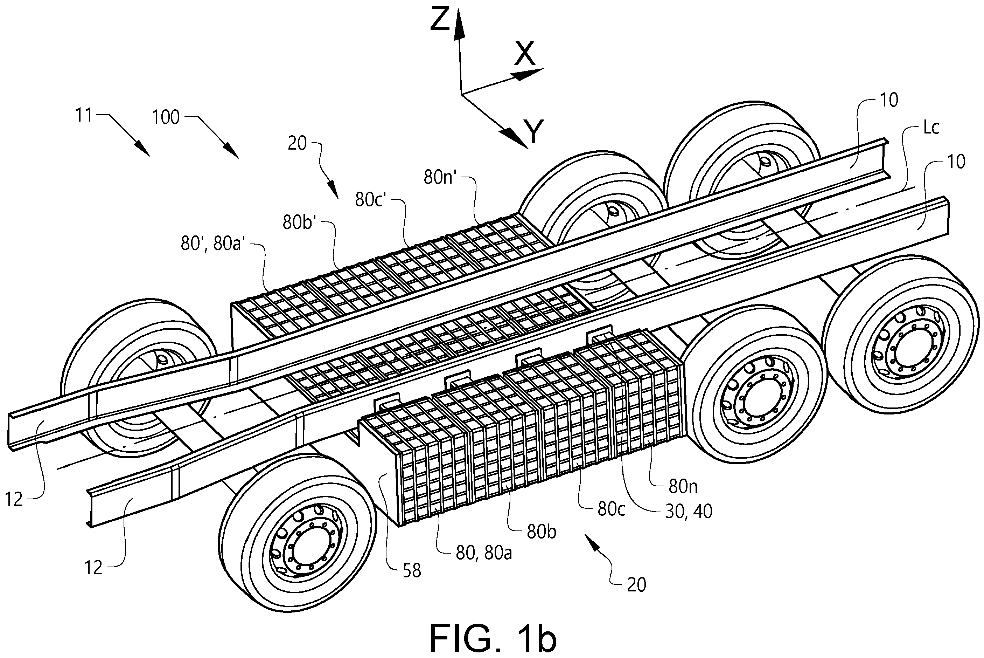

As depicted in Fig. 1b, the longitudinal frame 10 and the ESS 20 defines an arrangement 11 for the vehicle 1. As illustrated in Figs. 1a and 1b, the arrangement 11 extends a substantial part in a longitudinal direction X, a substantial part in a transverse direction Y and a substantial part in a vertical direction Z. Analogously, the ESS 20 extends a substantial part in the longitudinal direction X, a substantial part in the transverse direction Y and a substantial part in the vertical direction Z.

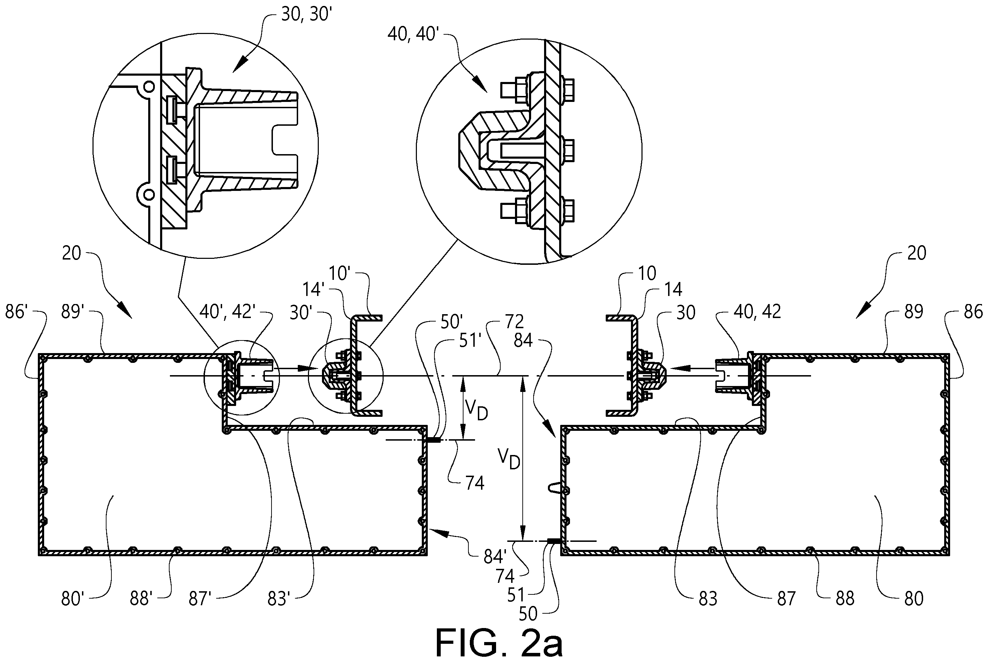

The longitudinal frame 10 defines a first transverse side 14 and second transverse side 14', as illustrated in e.g. Fig. 1b and Figs. 2a to 2d.

The ESS 20 is here arranged to contain an energy storage unit 80, e.g. one or more batteries, or one or more fuel cells, arranged to supply energy to an energy consumer such as a prime mover of the vehicle. When the energy storage system 20 comprises one or more batteries, the prime mover is provided in the form of an electric machine (not shown). In the example illustrated in the Figs. 1a to 4, the ESS 20 comprises a plurality of energy storage units 80, 80'. As may be gleaned from Fig. 1b, and further in Figs. 2a to 2d, the ESS 20 here comprises transversely opposite arranged first and second energy storage units 80, 80'. The first and second energy storage units 80, 80' are connected in a vertical orientation on opposite transverse sides 14, 14' of the longitudinal frame 10.

Similar to the ESS 20, each one of the first and second energy storage units 80, 80' extends a substantial part in the longitudinal direction X, a substantial part in the transverse direction Y and a substantial part in the vertical direction Z.

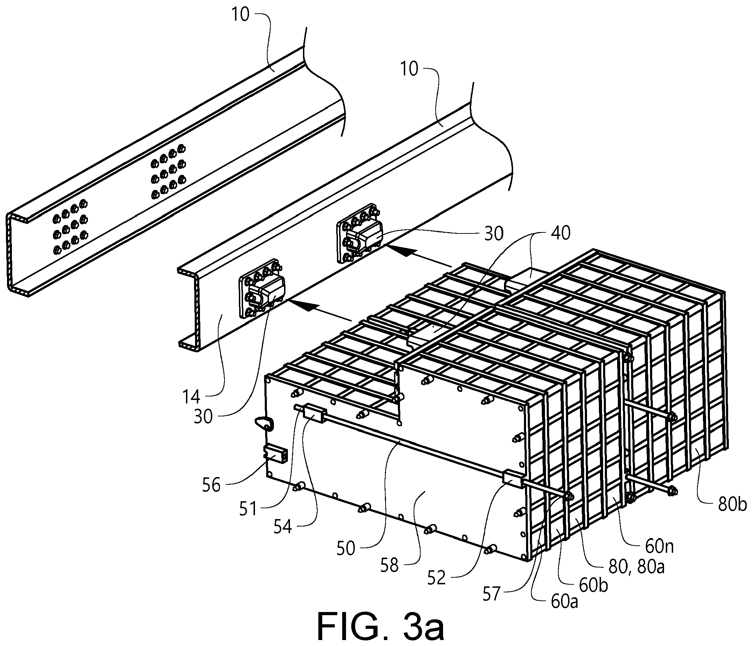

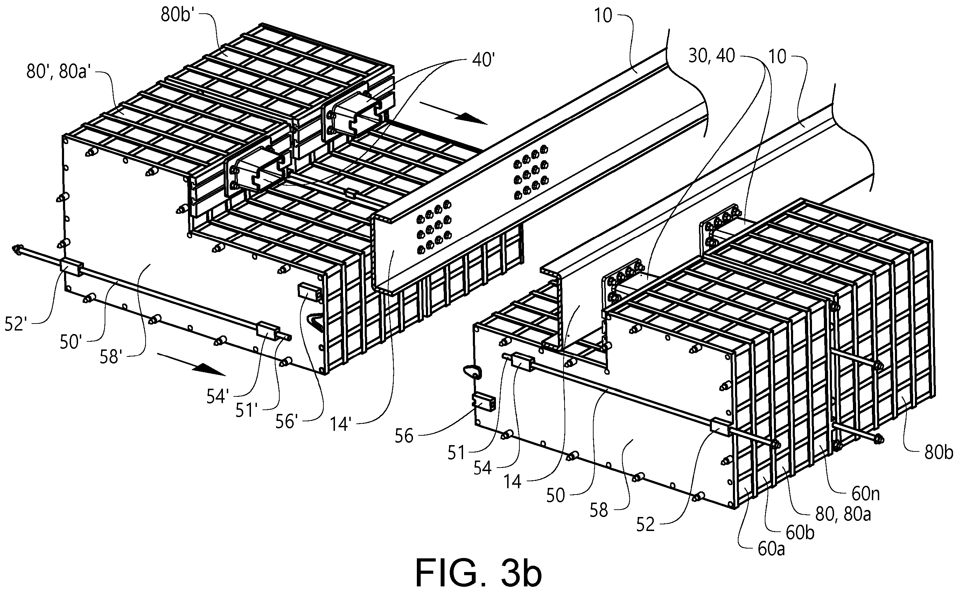

Further, as depicted in e.g. Fig. 1b, each one of the first and second energy storage units 80, 80' comprises a plurality of battery packs 60 a-n (shown in Fig. 3a) arranged in a stack configuration along the longitudinal direction X. By way of example, the energy storage units 80a-n and/or the battery packs 60a-n are arranged in the stack configuration via a number of inter-leaved portions 58 interconnecting longitudinal opposite arranged battery packs, as illustrated in e.g. Figs. 2a to 2d, but also in e.g. Fig. 3b. Thus, the ESS:s 20 here comprises a plurality of inter-leaved portions 58. It should be readily appreciated that the battery packs 60a-n may likewise be arranged in a stack configuration by other connection arrangements. In addition, the battery packs 60a-n may be arranged in a stack configuration by directly connecting the battery packs to each other, i.e. directly connecting a side of one battery pack to another adjacent side of another battery pack along the longitudinal direction X.

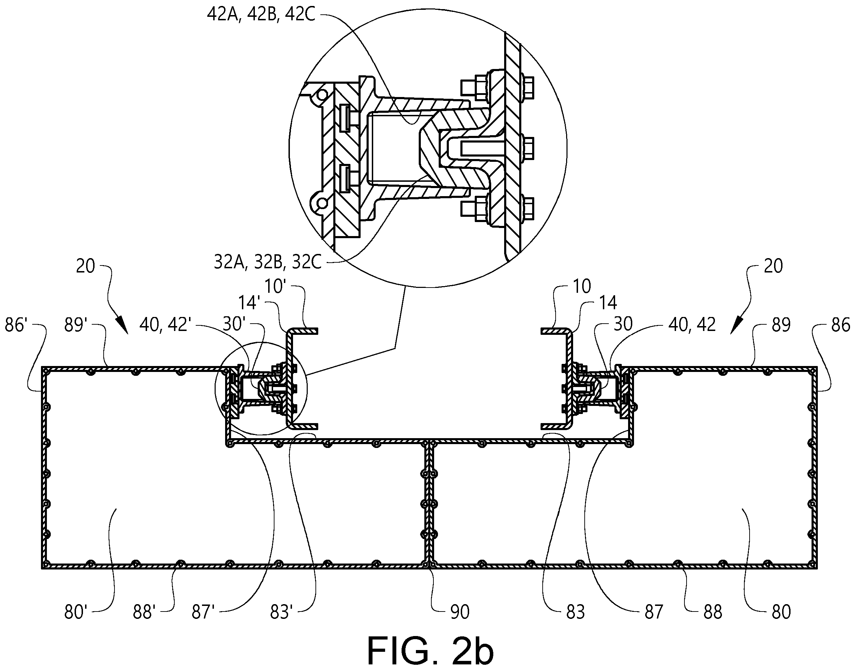

As depicted in e.g. Figs. 2a and 2b, the first energy storage unit 80 comprises a first transverse side 84 and second transverse side 86. Analogously, the second energy storage unit 80' comprises a first transverse side 84' and a second transverse side 86'. The first transverse side 84 and the first transverse side 84' are arranged on opposite transverse sides of the longitudinal center line L_{C}. In addition, in this example, the first transverse side 84 and the first transverse side 84' are opposite mating sides. Thus, the second transverse side 86 of the first energy storage unit 80 and the second transverse side 86' of the second energy storage unit 80' are arranged away from each other, and thus regarded as the transverse outermost sides.

Moreover, the first energy storage unit 80 is here shaped with an upper cut or step to partly enclose a bottom part of the vehicle frame. The step is defined by an upper transverse side 87 and a first vertical side 83. In addition, the first energy storage unit 80 comprises an uppermost vertical side 89 and a bottom vertical side 80.

Analogously, the second energy storage unit 80' is here shaped with a corresponding upper cut or step to partly enclose another side of the bottom part of the vehicle frame. The step is defined by an upper transverse side 87' and a first vertical side 83'. In addition, the second energy storage unit 80' comprises an uppermost vertical side 89' and a bottom vertical side 88'.

As such, the shape of the first energy storage unit 80 is defined by the first transverse side 84, upper transverse side 87, first vertical side 83, uppermost vertical side 89, second transverse side 86 and the bottom vertical side 80. Analogously, the shape of the second energy storage unit 80' is defined by the first transverse side 84', upper transverse side 87', first vertical side 83', uppermost vertical side 89', second transverse side 86' and the bottom vertical side 88'.

The ESS 20 further comprises an energy storage mounting system 100 according to any one of the examples described herein in relation to Figs. 1a to 4. Typically, each one of the first and second energy storage units 80, 80' are connected to the frames 10 by at least one energy storage mounting system 100. In other examples, a number of energy storage units may be connected to the frame 10 by means of a plurality of energy storage mounting systems 100.

Similar to the ESS 20, the energy storage mounting system 100 extends a substantial part in the longitudinal direction X, a substantial part in the transverse direction Y and a substantial part in the vertical direction Z.

According to the example depicted in Fig. 1b, the energy storage mounting system 100 is arranged on an outside surface 12 of the longitudinal frame 10. Hence, the outside surface 12 of the first longitudinal frame faces away from the outside surface 12 of the second longitudinal frame. The outside surfaces 12 typically corresponds to the opposite transverse sides 14, 14', as mentioned above.

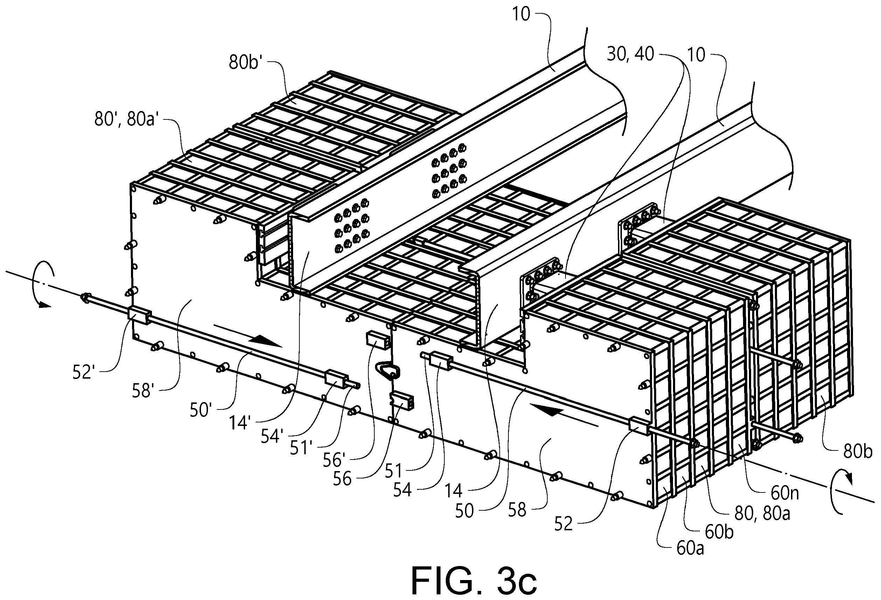

Turning again to Fig. 1b, which is a perspective view illustrating the energy storage mounting system 100 connecting the energy storage system 20 to the frame 10 in further detail. As may be gleaned from Fig. 1b, and also Figs. 3c to 3d, the energy storage system 20 is connected to the frame 10 by means of the plurality of energy storage mounting systems 100, in Fig. 1b exemplified as four energy storage mounting systems 100 on each side of the pair longitudinal frames 10.

As further depicted in Fig. 1b, in conjunction with Figs. 2a to 2d, the energy storage mounting systems 100 comprises a vehicle mounting member 30 connected to the outside surface 12 of the frame 10, and an energy storage unit mounting member 40 connected to the energy storage system 20. The vehicle mounting member 30 can be connected to the outside surface 12 by means of bolts or the like. Analogously, the energy storage unit mounting member 40 can be connected to the energy storage unit of the ESS 20 by means of corresponding bolts or the like. In this example, the energy storage unit mounting member 40 is connected to the upper transverse side 87 of the first energy storage unit 80.

Moreover, the energy storage mounting systems 100 comprises an energy storage units inter-connecting member 50 configured to inter-connect the first energy storage unit 80 with the second energy storage unit 80'. The ESS 20 is thus connected to the longitudinal frames 10, while a substantial part of the ESS 20 is arranged below the longitudinal frames 10. In addition, energy storage units of the ESS are transversely interconnected to each other vertical below the longitudinal frames 10. In particular, the energy storage system 20 extends between, and vertical below the pair of longitudinal frames 10.

In order to describe the energy storage mounting system 100 in further detail, reference is made to Figs. 2a - 4. With particular reference to Figs. 2a - 2d, the first energy storage unit 80 comprises a first energy storage unit mounting member 40. The first energy storage unit mounting member 40 is arranged at a first vertical position 72 for connecting to the vehicle mounting member 30. In addition, the energy storage units inter-connecting member 50 is connectable to the first energy storage unit 80 of the ESS 20 at a second vertical position 74. As depicted in e.g. Figs. 2a and 2b, the first vertical position 72 is vertically above the second vertical position 74. In other words, the first energy storage unit mounting member 40 and the energy storage units inter-connecting member 50 are arranged vertically spaced apart. In this context, the term vertically spaced apart refers to that the first energy storage unit mounting member 40 is arranged to be vertically spaced apart from the energy storage units inter-connecting member 50 by a vertical distance V_{D}, as illustrated in Fig. 2a, when the inter-connecting member 50 is inserted into the first energy storage unit 80 so as to form the inter-connecting configuration with the second energy storage unit 80'.

Accordingly, a vertical plane across first vertical position 72 is spaced apart from a vertical plane across the second vertical position 74 with the distance V_{D}.

Moreover, the first energy storage unit mounting member 40 and the energy storage units inter-connecting member 50 are separate parts of the energy storage mounting system 100.

Also, the first energy storage unit mounting member 40 and the energy storage units inter-connecting member 50 are configured to attach the first energy storage unit 80 in a generally vertical orientation to the longitudinal frame 10 of the vehicle, as illustrated in figs. 2a to 2d.

Turning again to the energy storage unit mounting member 40, as depicted in e.g. Fig. 2b, the energy storage unit mounting member 40 comprises a connecting portion 42 configured to connect with the vehicle mounting member 30. The connecting portion 42 comprises a rotational-locking element 42A adapted to prevent rotation of the ESS 20 when forming a rotational-locking connection with the corresponding vehicle mounting member 30.

Analogously, the vehicle mounting member 30 comprises a corresponding rotational-locking element 32. The rotational-locking elements 32 of the vehicle mounting member 30 and the connecting portion 42 can be designed in several different manners in order to provide a suitable rotational-locking connection as long as the connection is capable of preventing rotation of the first energy storage unit 80 in a plane defined by the transverse and vertical directions Y and Z, i.e. prevent rotation of the first energy storage unit about its Y-axis (corresponding to a transverse axis). By way of example, the rotational-locking elements are provided by having complementary cross-sectional profiles of the vehicle mounting member 30 and the connecting portion 42, as illustrated in e.g. Figs. 2b to 2d, and further described hereinafter. Moreover, the rotational-locking element 42A is further configured to allow for disengagement of the rotational-locking connection by a movement of the connecting portion 42 in the transverse direction Y.

In addition, the connecting portion 42 here defines a guide-aligning mating member 42B. The guide-aligning mating member has a circumferential angled surface 42C.

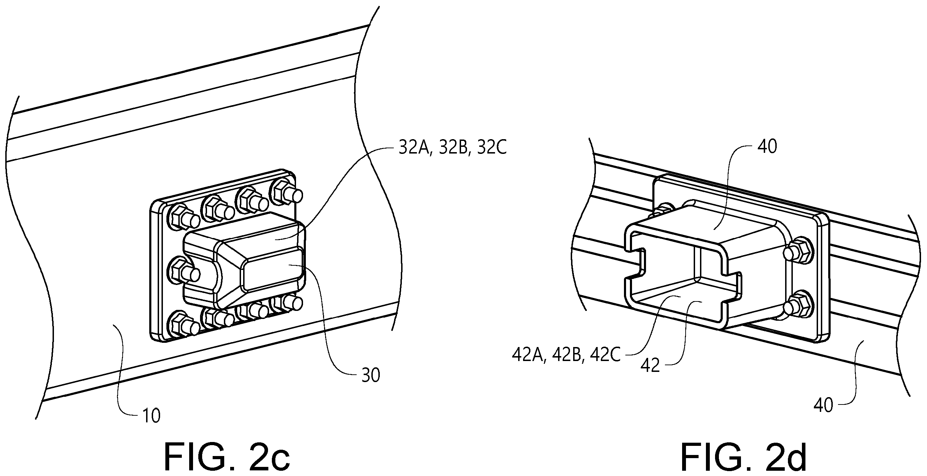

Analogously, the vehicle mounting member 30 here defines a corresponding guide-aligning mating member 32B. The guide-aligning mating member 32B has a circumferential angled surface 32C. As illustrated in Figs. 2c and 2d, the guide-aligning mating members 32B, 43B are complementary shaped guide-aligning mating members. That is, the guide-aligning mating member 32B comprises a cross-sectional profile defined by the circumferential angled surface 32C that has a slightly larger circumferential profile than a cross-sectional profile of the guide-aligning mating member 42B defined by the circumferential angled surface 42C, as depicted in Figs. 2c and 2d. Hence, the guide-aligning mating member 42B and guide-aligning mating member 32B are complementary shaped guide-aligning mating members having complementary circumferential angled surfaces, wherein the guide-aligning mating member 42B fits inside the guide-aligning mating member 32B. The guide-aligning mating member 42B of the connecting portion 42 is here a cup-shaped portion and the guide-aligning mating member 32B of the vehicle mounting member is a form of a bushing (cylindrical lining), as depicted in the Figs. 2b to 2d.

As such, the guide-aligning mating member 42B of the connecting portion 42 is adapted to slide onto the (inner) circumferential angled surface 32C of the vehicle mounting member 30 when the connecting portion 42 is inserted into the space defined by the cross-sectional profile of the guide-aligning mating member 32B from a transverse side. In other words, the corresponding guide-aligning mating members 32B, 42B are configured to self-align with each other into a connecting position (as depicted in e.g. Fig. 2b) upon a transverse movement of the first energy storage unit 80 of the ESS 20 towards the longitudinal frame 10 until the connecting portion 42 is in an end position relative to the vehicle mounting member 30. By way of example, only, the circumferential angled surfaces 32C, 42C of the vehicle mounting member 30 and the connecting portion 42 may allow for an initial misalignment of the connecting portion 40 relative to the member 30 by about 1 - 2 cm, at the insertion state (fig. 2a), while still be capable of guiding and aligning the connecting portion 40 relative to the member 30 into a correct position, as depicted in Fig. 2b.

Accordingly, by means of the circumferential angled surfaces 32C, 42C, the corresponding guide-aligning mating members are configured to self-align with each other into the connecting position (as depicted in e.g. Fig. 2b) upon the transverse movement of the first energy storage unit 80 of the ESS 20 towards the longitudinal frame 10. Further, by having a number energy storage system mounting system 100 arranged on one and the same side of the frame 10, it may also be possible to nearly avoid rotation around both the Y-axis and the Z-axis.

Turning again to Figs. 2a to 2d, the energy storage system mounting system 100 comprises the energy storage units inter-connecting member 50. For ease of reference, the energy storage units inter-connecting member 50 may simply be denoted as the inter-connecting member 50 throughout the description oof the examples.

The inter-connecting member 50 is connectable to the first energy storage unit 80 of the ESS 20. Moreover, the inter-connecting member is here a first inter-connecting member 50 that is configured to transversely inter-connect the transverse opposite first and second energy storage units 80, 80'. More specifically, the first inter-connecting member 50 is configured to interconnect a transverse side of the first energy storage unit 80 with a transverse side of second energy storage unit 80'. As illustrated in Figs. 2a to 2d, the energy storage units inter-connecting member 50 is configured to inter-connect the first transverse side 84 of the first energy storage unit with the opposite mating first transverse side 84' of the second energy storage unit. Generally, the inter-connecting member 50 is configured to inter-connect the first energy storage unit with the second energy storage unit by one or more threaded engagement portions, as further described herein.

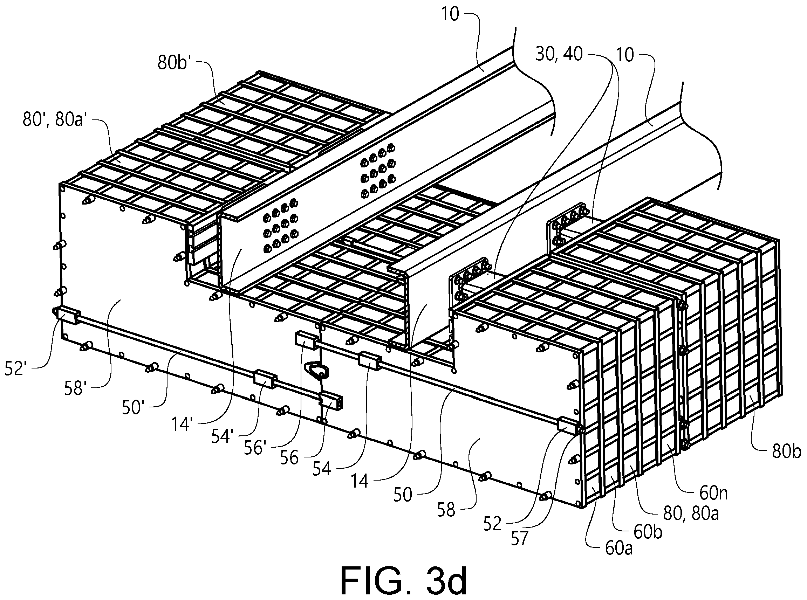

While the inter-connecting member 50 can be designed and provided in several different manners, the inter-connecting member is here an elongated inter-connecting member. The elongated inter-connecting member 50 is configured to be rotatably and transversely insertable from the second transverse side 86 of the first energy storage unit towards the second transverse side 86' of the second energy storage unit. As such, the first and second energy storage units 80, 80' are in an inter-connecting configuration 90 when the elongated inter-connecting member 50 extends transversely though the first energy storage unit 80 and connects with the first energy storage unit 80 and the second energy storage unit 80', as illustrated in e.g. Fig. 3. In some examples, the inter-connecting portion 50 may extend a substantial part through the second energy storage unit.

The elongated inter-connecting member 50 is configured to engage with a corresponding engagement part of the second energy storage unit 80'. By way of example, the elongated inter-connecting member 50 comprises an outer thread 51 for engaging at least with a corresponding thread 56' of the second energy storage unit 80'. In addition, the elongated inter-connecting member comprises an engagement portion 57 to engage with the first energy storage unit 80. The engagement portion 57 may comprise a locking element, as illustrated in Fig. 3d. The engagement portion 57 may connect and lock with a support structure 52, arranged on the first energy storage unit 80. Other engagement configurations are also conceivable between the elongated inter-connecting member and the energy storage unit(s).

By the corresponding threads, there is provided a tensioned inter-connecting configuration. In other words, the inter-connecting configuration between the first and second energy storage units 80, 80' defines a tensioned inter-connecting configuration.

As illustrated in Figs. 2a to 2d, the elongated inter-connecting member 50 is rotatably and transversely insertable into at least one of the interleaved portions. By way of example, each one of the interleaved portions comprises a number of transversely spaced apart supports 52, 54 for guiding the elongated inter-connecting member into its inter-connecting configuration with the opposite ESS unit 80'. Moreover, as illustrated in Figs. 2a to 2d, the system here further comprises an additional elongated inter-connecting member 50' which is rotatably and transversely insertable into an interleaved portion of the second energy storage unit 80'. By way of example, the interleaved portion comprises a number of transversely spaced apart supports 52', 54' for guiding the elongated inter-connecting member 50' into its inter-connecting configuration with the opposite ESS unit 80.

Similar to the configuration of the first energy storage unit 80, the second energy storage unit 80' comprises a corresponding energy storage unit mounting member 40', as depicted e.g. in Figs. 1b, 2a to 2d and 3a to 3d. The energy storage unit mounting member 40' comprises a corresponding connecting portion 42' configured to connect with a corresponding vehicle mounting member 30'. The corresponding vehicle mounting member 30' is arranged on the transverse side 14' of the longitudinal frame 10, as illustrated in e.g. Fig. 2b.

Further, the corresponding energy storage unit mounting member 40' is configured to attach the second energy storage unit in a generally vertical orientation to the second transverse side 14' of the longitudinal frame 10 of the vehicle. In this example, the energy storage unit mounting member 40' is connected to the upper transverse side 87' of the second energy storage unit 80'. It may also be connected by means of bolts of the like.

Moreover, the first and second energy storage units 80, 80' are inter-connected by the energy storage units inter-connecting members 50, 50', as described above.

In other words, the energy storage unit mounting member 40' and the energy storage units inter-connecting member 50 are arranged vertically spaced apart. In a similar vein, the energy storage unit mounting member 40' and the energy storage units inter-connecting member 50' are arranged vertically spaced apart.

Moreover, the energy storage unit mounting member 40', the energy storage units inter-connecting member 50 and the energy storage units inter-connecting member 50' are separate parts of the energy storage mounting system 100.

As illustrated in e.g. Fig. 2a in conjunction with 2b, the energy storage unit mounting member 40 and the energy storage unit mounting member 40' are arranged on the same vertical position 72. In addition, the vehicle mounting member 30 and the vehicle mounting member 30' are arranged on the same vertical position 72. Hence, the connection between the energy storage unit mounting member 40 and the vehicle mounting member 30 and the connection between the energy storage unit mounting member 40' and the vehicle mounting member 30', respectively, are positioned in the same vertical position 72, and which is vertically spaced apart from the second vertical position 74. In an example where the system comprises a number of energy storage units inter-connecting members 50, 50', as illustrated in Fig. 2a, each one of the energy storage units inter-connecting members 50, 50' are arranged at a vertical position, e.g. 74 and 74' that are vertically spaced apart from the vertical position 72. In addition, any one of the vertical positions 74 and 74' are vertically below the first vertical position 72. Accordingly, the first vertical position 72 is an upper vertical position while the second vertical position 74, 74' is a lower vertical position in relation to the first vertical position 72.

The following will now, with reference to Figs. 3a - 3d, describes the procedure of mounting the energy storage system 20 to the longitudinal frame 10 of the vehicle 1.

As can be seen in Fig. 3a, a first energy storage unit 80 of the energy storage system 20 is arranged in its final position, but still not sufficiently connected to the longitudinal frame 10. The first energy storage unit mounting member 40 is arranged in vertical alignment with the energy storage units inter-connecting member 50. Subsequently, upon a transverse movement of the first energy storage unit 80 of the ESS 20 towards the longitudinal frame 10, the connecting portion 42 of the first energy storage unit mounting member 40 is insertable into the vehicle mounting member 30. Further, by the guide-aligning member of the first energy storage unit mounting member 40 and the vehicle mounting member 30, the connecting portion 42 and the mounting member 30 are capable to self-align with each other into the connecting position (as depicted in Fig. 2d) upon the transverse movement of the first energy storage unit 80 of the ESS 20 towards the longitudinal frame 10.

Then, as illustrated in fig. 3b, when the connecting portion 42 is arranged inside the vehicle mounting member 30 in the connection state, a second energy storage unit 80 of the energy storage system 20 is to be arranged in its final position and subsequently moved in the transverse direction towards the other side of the longitudinal frame 10. The connection of the second energy storage unit 80 to the frame 10 is provided in a similar sequence and by similar components as described above in relation to the connection of the first energy storage unit 80 to the frame 10.

Thereafter, two energy storage units inter-connecting members 50, 50' are transitioned from their disconnected state, depicted in Fig. 3c, to their connected state depicted in Fig. 3d. The inter-connecting members 50, 50' have been moved from their disconnected state to their connected state by means of a rotational movement, so as to engage with the threaded portions 56, 56', as described above.

As illustrated in Fig. 3c, the inter-connecting configuration 90 is provided by rotatably and transversely insert one or more elongated inter-connecting members 50, 50', e.g. from the second transverse side 86 of the first energy storage unit 80 towards the second transverse side 86' of the second energy storage unit 80'. The first and second energy storage units 80, 80' are thus in the inter-connecting configuration 90 when the elongated inter-connecting member 50 extends transversely though the first energy storage unit 80 and a substantial part through the second energy storage unit 80', as illustrated in e.g. Fig. 3d. In other words, the energy storage units inter-connecting member 50 is configured to inter-connect the first transverse side 84 of the first energy storage unit with the opposite mating first transverse side 84' of the second energy storage unit.

Hence, in an example with right- and left-hand-side (RHS, LHS) groups of battery packs, it should be noted that they are joined to each other along a central line, LC, below the longitudinal frame 10, as depicted in e.g. Fig. 1b or Fig. 2b.

Further, by means of the corresponding rotational-locking elements 42A, 32A, the ESS 20 is connected to the frame 10 in the rotational-locking configuration so as to prevent rotation of the ESS 20. In addition, when the ESS 20 is connected to the longitudinal frame by means of an energy storage mounting system 100 comprising a number of connecting portions 42 and vehicle frame mounting portions 30 along the longitudinal direction X, it may be even be possible to lock the ESS 20 against rotation around an Z-axis, as extending in the vertical direction.

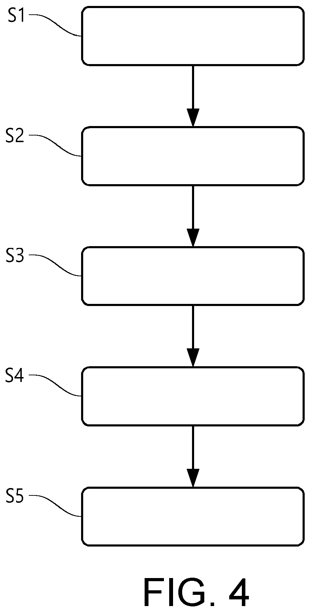

In order to sum up, reference is made to Fig. 4 which is a flow chart of a method for mounting the energy storage system to the longitudinal frame of the vehicle. In a first step, the energy storage unit mounting member of the first energy storage unit is positioned S1 in a facing relationship with the corresponding vehicle mounting member on the first transverse side of the longitudinal frame. Thereafter, the energy storage unit mounting member is transversely moved S2 towards the vehicle mounting member until the connecting portion of the energy storage unit mounting member forms the connection with the vehicle mounting member on the first transverse side. Further, the energy storage unit mounting member of the second energy storage unit is positioned S3 in a facing relationship with the corresponding vehicle mounting member on the second transverse side of the longitudinal frame, the second transverse side being opposite arranged the first transverse side. Then, the energy storage unit mounting member of the second energy storage unit is transversely moved S4 towards the vehicle mounting member until the connecting portion of the energy storage unit mounting member forms the connection with the vehicle mounting member on the second transverse side.

Subsequently, the opposite first and second energy storage units are transversely inter-connected S5 by the energy storage units inter-connecting member.

Accordingly, the examples of the Figs. 1 to 4 further relate to the vehicle 1 comprising the arrangement 11 including the longitudinal frame 10 and the energy storage system 20. In addition, the examples of the Figs. 1 to 4 relate to the vehicle 1 comprising at least one ESS 20. In addition, the examples of the Figs. 1 to 4 relate to the vehicle 1 comprising at least one ESS mounting system 40.

It is to be understood that the present invention is not limited to the embodiments described above and illustrated in the drawings; rather, the skilled person will recognize that many changes and modifications may be made within the scope of the appended claims.

## Claims

1. An energy storage system, ESS, (20) for a vehicle, comprising first and second energy storage units (80, 80') and an energy storage mounting system (100), the energy storage system extending in a longitudinal direction (X), a transverse direction (Y) and in a vertical direction (Z), the energy storage mounting system comprising vertically spaced-apart first energy storage unit mounting member (40) and energy storage units inter-connecting member (50), wherein
- the first energy storage unit mounting member (40) is connectable to a first energy storage unit (80) of the ESS (20), and further being arranged at a first vertical position (72) for connecting to a vehicle mounting member (30), the energy storage unit mounting member (40) comprising a connecting portion (42) configured to connect with the vehicle mounting member (30); and
- the energy storage units inter-connecting member (50, 50') is connectable to the first energy storage unit (80) of the ESS (20) at a second vertical position (74), wherein said first vertical position is vertically above said second vertical position, and further configured to transversely inter-connect the first energy storage unit with a transversely opposite second energy storage unit (80').

2. The energy storage system according to claim 1, wherein the connecting portion (42) comprises a rotational-locking element adapted to restrict rotation of the energy storage system when forming a rotational-locking connection with the corresponding vehicle mounting member (30).

3. The energy storage system according to claims 1 or 2, further comprising the vehicle mounting member (30) connectable to a longitudinal frame (10) of the vehicle, said vehicle mounting member (30) comprising a mating rotational-locking element.

4. The energy storage system according to any one of the preceding claims, wherein the connecting portion and the vehicle mounting member define corresponding guide-aligning mating members configured to at least partly self-align with each other into a connecting position upon a transverse movement of the first energy storage unit (80) of the ESS (20) towards the longitudinal frame (10).

5. The energy storage system according to claim 4, wherein the guide-aligning mating members are complementary shaped guide-aligning mating members.

6. The energy storage system according to any one of the preceding claims , wherein the first energy storage unit mounting member and the energy storage units inter-connecting member are configured to connect the first energy storage unit (80) in a generally vertical orientation to the longitudinal frame (10) of the vehicle and transversely inter-connect the first energy storage unit with the opposite second energy storage unit.

7. The energy storage system according to any one of the preceding claims, wherein the second energy storage unit (80') comprises a corresponding energy storage unit mounting member (40') having a corresponding connecting portion (42') configured to connect with a corresponding vehicle mounting member (30'), wherein the corresponding energy storage unit mounting member is configured to attach the second energy storage unit (80') in a generally vertical orientation to a second transverse side (14') of the longitudinal frame (10) of the vehicle, while the first and second energy storage units are inter-connected by the energy storage units inter-connecting member.

8. The energy storage system according to any one of the preceding claims, wherein the energy storage units inter-connecting member (50, 50') is configured to inter-connect a first transverse side (84) of the first energy storage unit with an opposite mating first transverse side (84') of the second energy storage unit.

9. The energy storage system according to any one of the preceding claims, wherein the energy storage units inter-connecting member is an elongated inter-connecting member configured to be rotatably and transversely insertable from a second transverse side (86) of the first energy storage unit towards a second transverse side (86') of the second energy storage unit, whereby the first and second energy storage units are set in an inter-connecting configuration (90) when said elongated inter-connecting member extends transversely though the first energy storage unit and inter-connect with a part of the second energy storage unit.

10. The energy storage system according to claim 9, wherein the elongated inter-connecting member comprises an outer thread (51, 51') for engaging at least with a corresponding thread (56', 56) of the second energy storage unit.

11. The energy storage system according to any one of the preceding claims, wherein each one of the first and second energy storage units comprises a plurality of battery packs (60a-n) arranged in a stack configuration along the longitudinal direction.

12. The energy storage system according to claim 11, wherein the battery packs are arranged in the stack configuration via a number of inter-leaved portions (58) interconnecting longitudinal opposite arranged battery packs.

13. The energy storage system according to claim 12, when dependent on claim 10, wherein the elongated inter-connecting member is rotatably and transversely insertable into at least one of the interleaved portions.

14. An arrangement (11) for a vehicle comprising a longitudinal frame (10) and an energy storage system (20) according to any one of the preceding claims, wherein transversely opposite first and second energy storage units (80, 80') are connectable in a vertical orientation on opposite transverse sides (14, 14') of the longitudinal frame (10).

15. A vehicle (1) comprising an energy storage system according to any one of the claims 1 to 13, and an arrangement according to claim 14.

16. A method for mounting an energy storage system, ESS, to a longitudinal frame of a vehicle, said longitudinal frame having a vehicle mounting member and the energy storage system comprising a plurality of energy storage units, each one of the energy storage units having a corresponding energy storage unit mounting member, wherein the ESS further comprises an energy storage units inter-connecting member, the method comprising:
- positioning (S1) an energy storage unit mounting member of a first energy storage unit in a facing relationship with a corresponding vehicle mounting member on a first transverse side of the longitudinal frame;
- transversely moving (S2) the energy storage unit mounting member towards the vehicle mounting member until a connecting portion of the energy storage unit mounting member forms a connection with the vehicle mounting member on the first transverse side;
- positioning (S3) an energy storage unit mounting member of a second energy storage unit in a facing relationship with a corresponding vehicle mounting member on a second transverse side of the longitudinal frame, the second transverse side being opposite arranged the first transverse side;
- transversely moving (S4) the energy storage unit mounting member of the second energy storage unit towards the corresponding vehicle mounting member until a connecting portion of the energy storage unit mounting member forms a connection with the corresponding vehicle mounting member on the second transverse side; and
- transversely inter-connecting (S5) the opposite first and second energy storage units by the energy storage units inter-connecting member.

## Patentansprüche

1. Energiespeichersystem, ESS, (20) für ein Fahrzeug, umfassend erste und zweite Energiespeichereinheiten (80, **80')** und ein Energiespeichermontagesystem (100), wobei sich das Energiespeichersystem in einer Längsrichtung (X), einer Querrichtung (Y) und in einer vertikalen Richtung (Z) erstreckt, das Energiespeichermontagesystem umfassend ein vertikal beabstandetes erstes Energiespeichereinheiten-Montageelement (40) und ein Energiespeichereinheiten-Verbindungselement (50), wobei
- das erste Energiespeichereinheiten-Montageelement (40) mit einer ersten Energiespeichereinheit (80) des ESS (20) verbindbar ist und ferner an einer ersten vertikalen Position (72) zur Verbindung mit einem Fahrzeugmontageelement (30) angeordnet ist, wobei das Energiespeichereinheiten-Montageelement (40) einen Verbindungsabschnitt (42) umfasst, der zur Verbindung mit dem Fahrzeugmontageelement (30) konfiguriert ist; und
- das Energiespeichereinheiten-Verbindungselement (50, 50') mit der ersten Energiespeichereinheit (80) des ESS (20) an einer zweiten vertikalen Position (74) verbindbar ist, wobei die erste vertikale Position vertikal über der zweiten vertikalen Position liegt, und ferner so konfiguriert ist, dass es die erste Energiespeichereinheit mit einer in Querrichtung gegenüberliegenden zweiten Energiespeichereinheit (80') quer verbindet.

2. Energiespeichersystem nach Anspruch 1, wobei der Verbindungsabschnitt (42) ein Drehverriegelungselement umfasst, das angepasst ist, die Drehung des Energiespeichersystems einzuschränken, wenn es eine Drehverriegelungsverbindung mit dem entsprechenden Fahrzeugmontageelement (30) bildet.

3. Energiespeichersystem nach Anspruch 1 oder 2, ferner umfassend das Fahrzeugmontageelement (30), das mit einem Längsrahmen (10) des Fahrzeugs verbunden werden kann, wobei das Fahrzeugmontageelement (30) ein passendes Drehverriegelungselement umfasst.

4. Energiespeichersystem nach einem der vorhergehenden Ansprüche, wobei der Verbindungsabschnitt und das Fahrzeugmontageelement entsprechende Führungsausrichtungs-Gegenelemente definieren, die so konfiguriert sind, dass sie sich bei einer Querbewegung der ersten Energiespeichereinheit (80) des ESS (20) in Richtung des Längsrahmens (10) zumindest teilweise selbst in eine Verbindungsposition ausrichten.

5. Energiespeichersystem nach Anspruch 4, wobei die Führungsausrichtungs-Gegenelemente komplementär geformte Führungsausrichtungs-Gegenelemente sind.

6. Energiespeichersystem nach einem der vorhergehenden Ansprüche, wobei das erstes Energiespeichereinheiten-Montageelement und das Energiespeichereinheiten-Verbindungselement so konfiguriert sind, dass sie die erste Energiespeichereinheit (80) in einer im Allgemeinen vertikalen Ausrichtung mit dem Längsrahmen (10) des Fahrzeugs verbinden und die erste Energiespeichereinheit mit der gegenüberliegenden zweiten Energiespeichereinheit in Querrichtung miteinander verbinden.

7. Energiespeichersystem nach einem der vorhergehenden Ansprüche, wobei die zweite Energiespeichereinheit (80') ein entsprechendes Energiespeichereinheiten-Montageelement (40') mit einem entsprechenden Verbindungsabschnitt (42') umfasst, der so konfiguriert ist, dass er mit einem entsprechenden Fahrzeugmontageelement (30') verbunden werden kann, wobei das entsprechende Energiespeichereinheiten-Montageelement so konfiguriert ist, dass es die zweite Energiespeichereinheit (80') in einer allgemein vertikalen Ausrichtung an einer zweiten Querseite (14') des Längsrahmens (10) des Fahrzeugs befestigt, während die erste und die zweite Energiespeichereinheit durch das Energiespeichereinheiten-Verbindungselement miteinander verbunden sind.

8. Energiespeichersystem nach einem der vorhergehenden Ansprüche, wobei das Energiespeichereinheiten-Verbindungselement (50, 50') so konfiguriert ist, dass es eine erste Querseite (84) der ersten Energiespeichereinheit mit einer gegenüberliegenden, passenden ersten Querseite (84') der zweiten Energiespeichereinheit verbindet.

9. Energiespeichersystem nach einem der vorhergehenden Ansprüche, wobei das Energiespeichereinheiten-Verbindungselement ein längliches Verbindungselement ist, das so konfiguriert ist, dass es drehbar und in Querrichtung von einer zweiten Querseite (86) der ersten Energiespeichereinheit zu einer zweiten Querseite (86') der zweiten Energiespeichereinheit einführbar ist, wodurch die erste und die zweite Energiespeichereinheit in eine Verbindungskonfiguration (90) gebracht werden, wenn sich das längliche Verbindungselement quer durch die erste Energiespeichereinheit erstreckt und mit einem Teil der zweiten Energiespeichereinheit verbunden ist.

10. Energiespeichersystem nach Anspruch 9, wobei das längliche Verbindungselement ein Außengewinde (51, 51') zum Eingriff in mindestens ein entsprechendes Gewinde (56', 56) der zweiten Energiespeichereinheit umfasst.

11. Energiespeichersystem nach einem der vorhergehenden Ansprüche, wobei jede der ersten und zweiten Energiespeichereinheiten mehrere Batteriepacks (60a-n) umfasst, die in einer Stapelkonfiguration entlang der Längsrichtung angeordnet sind.

12. Energiespeichersystem nach Anspruch 11, wobei die Batteriepacks in der Stapelkonfiguration über eine Anzahl von ineinandergreifenden Abschnitten (58) angeordnet sind, die in Längsrichtung gegenüberliegend angeordnete Batteriepacks miteinander verbinden.

13. Energiespeichersystem nach Anspruch 12, wenn es von Anspruch 10 abhängt, wobei das längliche Verbindungselement drehbar und quer in mindestens einen der verschachtelten Abschnitte einführbar ist.

14. Anordnung (11) für ein Fahrzeug umfassend einen Längsrahmen (10) und ein Energiespeichersystem (20) nach einem der vorhergehenden Ansprüche, wobei quer gegenüberliegende erste und zweite Energiespeichereinheiten (80, 80') in vertikaler Ausrichtung auf gegenüberliegenden Querseiten (14, 14') des Längsrahmens (10) verbindbar sind.

15. Fahrzeug (1) umfassend ein Energiespeichersystem nach einem der Ansprüche 1 bis 13 und eine Anordnung nach Anspruch 14.

16. Verfahren zur Montage eines Energiespeichersystems, ESS, an einen Längsrahmen eines Fahrzeugs, wobei der Längsrahmen ein Fahrzeugmontageelement aufweist und das Energiespeichersystem mehrere Energiespeichereinheiten umfasst, wobei jede der Energiespeichereinheiten ein entsprechendes Energiespeichereinheiten-Montageelement aufweist, wobei das ESS ferner ein Energiespeichereinheiten-Verbindungselement umfasst, wobei das Verfahren umfasst:
- Positionieren (S1) eines Energiespeichereinheiten-Montageelements einer ersten Energiespeichereinheit in einer gegenüberliegenden Beziehung mit einem entsprechenden Fahrzeugmontageelement auf einer ersten Querseite des Längsrahmens;
- Querbewegen (S2) des Energiespeichereinheiten-Montageelements in Richtung des Fahrzeugmontageelements, bis ein Verbindungsabschnitt des Energiespeichereinheiten-Montageelements eine Verbindung mit dem Fahrzeugmontageelement an der ersten Querseite bildet;
- Positionieren (S3) eines Energiespeichereinheiten-Montageelements einer zweiten Energiespeichereinheit in einer gegenüberliegenden Beziehung mit einem entsprechenden Fahrzeugmontageelement auf einer zweiten Querseite des Längsrahmens, wobei die zweite Querseite gegenüber der ersten Querseite angeordnet ist;
- Querbewegen (S4) des Energiespeichereinheiten-Montageelements der zweiten Energiespeichereinheit in Richtung des entsprechenden Fahrzeugmontageelements, bis ein Verbindungsabschnitt des Energiespeichereinheiten-Montageelements eine Verbindung mit dem entsprechenden Fahrzeugmontageelement an der zweiten Querseite bildet;
und
- Querverbinden (S5) der gegenüberliegenden ersten und zweiten Energiespeichereinheiten durch das Energiespeichereinheiten-Verbindungselement.

## Revendications

1. Système de stockage d'énergie, ESS, (20) pour véhicule, comprenant des première et seconde unités de stockage d'énergie (80, 80') et un système de montage d'accumulateur d'énergie (100), le système de stockage d'énergie s'étendant dans une direction longitudinale (X), une direction transversale (Y) et une direction verticale (Z), le système de montage d'accumulateur d'énergie comprenant un premier élément de montage d'unité de stockage d'énergie espacé verticalement (40) et un élément d'interconnexion d'unités de stockage d'énergie (50), dans lequel
- le premier élément de montage d'unité de stockage d'énergie (40) peut être connecté à une première unité de stockage d'énergie (80) de l'ESS (20), et est en outre disposé à une première position verticale (72) pour être connecté à un élément de montage de véhicule (30), l'élément de montage d'unité de stockage d'énergie (40) comprenant une partie connexion (42) configurée pour se connecter à l'élément de montage de véhicule (30) ; et
- l'élément d'interconnexion des unités de stockage d'énergie (50, 50') peut être connecté à la première unité de stockage d'énergie (80) de l'ESS (20) à une seconde position verticale (74), ladite première position verticale étant verticalement au-dessus de ladite seconde position verticale, et configurée en outre pour interconnecter transversalement la première unité de stockage d'énergie avec une seconde unité de stockage d'énergie transversalement opposée (80').

2. Système de stockage d'énergie selon la revendication 1, dans lequel la partie connexion (42) comprend un élément de verrouillage en rotation apte à restreindre la rotation du système de stockage d'énergie lors de l'établissement d'une connexion de verrouillage en rotation avec l'élément de montage de véhicule correspondant (30).

3. Système de stockage d'énergie selon la revendication 1 ou 2, comprenant en outre l'élément de montage de véhicule (30) pouvant être connecté à un châssis longitudinal (10) du véhicule, ledit élément de montage de véhicule (30) comprenant un élément de verrouillage en rotation correspondant.

4. Système de stockage d'énergie selon l'une quelconque des revendications précédentes, dans lequel la partie connexion et l'élément de montage de véhicule définissent des éléments correspondants d'alignement de guide configurés pour s'auto-aligner au moins partiellement l'un avec l'autre dans une position de connexion lors d'un mouvement transversal de la première unité de stockage d'énergie (80) de l'ESS (20) vers le châssis longitudinal (10).

5. Système de stockage d'énergie selon la revendication 4, dans lequel les éléments correspondants d'alignement de guide sont des éléments correspondants d'alignement de guide de forme complémentaire.

6. Système de stockage d'énergie selon l'une quelconque des revendications précédentes, dans lequel le premier élément de montage d'unité de stockage d'énergie et l'élément d'interconnexion d'unités de stockage d'énergie sont configurés pour connecter la première unité de stockage d'énergie (80) dans une orientation globalement verticale au châssis longitudinal (10) du véhicule et interconnecter transversalement la première unité de stockage d'énergie avec la seconde unité de stockage d'énergie opposée.

7. Système de stockage d'énergie selon l'une quelconque des revendications précédentes, dans lequel la seconde unité de stockage d'énergie (80') comprend un élément de montage d'unité de stockage d'énergie correspondant (40') ayant une partie connexion correspondante (42') configurée pour se connecter à un élément de montage de véhicule correspondant (30'), l'élément de montage correspondant de l'unité de stockage d'énergie étant configuré pour fixer la seconde unité de stockage d'énergie (80') dans une orientation globalement verticale à un second côté transversal (14') du châssis longitudinal (10) du véhicule, tandis que les première et seconde unités de stockage d'énergie sont interconnectées par l'élément d'interconnexion des unités de stockage d'énergie.

8. Système de stockage d'énergie selon l'une quelconque des revendications précédentes, dans lequel l'élément d'interconnexion d'unités de stockage d'énergie (50, 50') est configuré pour interconnecter un premier côté transversal (84) de la première unité de stockage d'énergie avec un premier côté transversal correspondant opposé (84') de la seconde unité de stockage d'énergie.

9. Système de stockage d'énergie selon l'une quelconque des revendications précédentes, dans lequel l'élément d'interconnexion des unités de stockage d'énergie est un élément d'interconnexion allongé configuré pour être inséré de manière à pouvoir tourner et à être insérable transversalement depuis un second côté transversal (86) de la première unité de stockage d'énergie vers un second côté transversal (86') de la seconde unité de stockage d'énergie, les première et seconde unités de stockage d'énergie étant mises dans une configuration d'interconnexion (90) lorsque ledit élément d'interconnexion allongé s'étend transversalement à travers la première unité de stockage d'énergie et s'interconnecte avec une partie de la seconde unité de stockage d'énergie.

10. Système de stockage d'énergie selon la revendication 9, dans lequel l'élément d'interconnexion allongé comprend un filetage extérieur (51, 51') destiné à s'engager au moins avec un filetage correspondant (56', 56) de la seconde unité de stockage d'énergie.

11. Système de stockage d'énergie selon l'une quelconque des revendications précédentes, dans lequel chacune des première et seconde unités de stockage d'énergie comprend une pluralité de blocs-batteries (60a-n) agencés selon une configuration d'empilement le long de la direction longitudinale.

12. Système de stockage d'énergie selon la revendication 11, dans lequel les blocs-batteries sont agencés dans la configuration d'empilement par l'intermédiaire d'un certain nombre de sections intercalaires (58) interconnectant des blocs-batteries agencés longitudinalement opposés.

13. Système de stockage d'énergie selon la revendication 12, lorsqu'elle dépend de la revendication 10, dans lequel l'élément allongé d'interconnexion peut être inséré de manière à pouvoir tourner et à être inséré transversalement dans au moins l'une des sections imbriquées.

14. Agencement (11) pour véhicule comprenant un châssis longitudinal (10) et un système de stockage d'énergie (20) selon l'une quelconque des revendications précédentes, dans lequel des première et seconde unités de stockage d'énergie (80, 80') transversalement opposées peuvent être reliées en orientation verticale sur des côtés transversaux opposés (14, 14') du châssis longitudinal (10).

15. Véhicule (1) comprenant un système de stockage d'énergie selon l'une quelconque des revendications 1 à 13, et un agencement selon la revendication 14.

16. Procédé de montage d'un système de stockage d'énergie, ESS, sur un châssis longitudinal d'un véhicule, ledit châssis longitudinal ayant un élément de montage de véhicule et le système de stockage d'énergie comprenant une pluralité d'unités de stockage d'énergie, chacune des unités de stockage d'énergie ayant un élément de montage d'unité de stockage d'énergie correspondant, l'ESS comprenant en outre un élément d'interconnexion d'unités de stockage d'énergie, le procédé comprenant :
- le positionnement (S1) d'un élément de montage d'unité de stockage d'énergie d'une première unité de stockage d'énergie en face d'un élément de montage de véhicule correspondant sur un premier côté transversal du châssis longitudinal ;
- le déplacement transversal (S2) de l'élément de montage de l'unité de stockage d'énergie vers l'élément de montage du véhicule jusqu'à ce qu'une partie connexion de l'élément de montage de l'unité de stockage d'énergie établisse les données du véhicule blocs de batteries établisse une liaison avec l'élément de montage de véhicule sur le premier côté transversal ;
- le positionnement (S3) d'un élément de montage de l'unité de stockage d'énergie d'une seconde unité de stockage d'énergie en face d'un élément de montage du véhicule correspondant sur un second côté transversal du châssis longitudinal, le second côté transversal étant disposé à l'opposé du premier côté transversal ;
- le déplacement transversal (S4) de l'élément de montage d'unité de stockage d'énergie de la seconde unité de stockage d'énergie vers l'élément de montage correspondant du véhicule jusqu'à ce qu'une partie connexion de l'élément de montage de l'unité de stockage d'énergie établisse une liaison avec l'élément de montage correspondant du véhicule sur le second côté transversal ; et
- l'interconnexion transversale (S5) des première et seconde unités de stockage d'énergie opposées par l'élément d'interconnexion d'unités de stockage d'énergie.
